(19) Europäisches Patentamt
European Patent Office
Office européen des brevets

(11) **EP 4 773 719 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*H04W 74/0833* (2024.01)

(21) Application number: 24883900.3

(22) Date of filing: 29.05.2024

(52) Cooperative Patent Classification (CPC):
H04L 5/00; H04W 74/08; H04W 74/0833;
H04W 76/27

(86) International application number:
PCT/CN2024/096141

(87) International publication number:
WO 2025/091888 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.10.2023 CN 202311444826

(71) Applicant: ZTE Corporation
Shenzhen, Guangdong 518057 (CN)

(72) Inventors:
• ZHANG, Junfeng
  Shenzhen, Guangdong 518057 (CN)
• LIU, Xing
  Shenzhen, Guangdong 518057 (CN)
• HAN, Xianghui
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **RANDOM ACCESS METHODS, COMMUNICATION APPARATUSES AND STORAGE MEDIUM**

(57) Provided are random access methods, communication apparatuses and a storage medium. A random access method is applied to a first node. The method comprises: sending a plurality of random access preambles to a second node, wherein the plurality of random access preambles are used for jointly determining a random access preamble corresponding to a random access process; and receiving a random access response message sent by the second node.

```
                                                      S101
  ┌─────────────────────────────────┐  ⌐
  │  Send a plurality of random access │
  │    preambles to a second node      │
  └─────────────────────────────────┘
                  │
                  ▼                    S102
  ┌─────────────────────────────────┐  ⌐
  │  Receive a random access response  │
  │   message sent by the second node  │
  └─────────────────────────────────┘
```

FIG. 4

**Description**

The present disclosure claims priority to Chinese Patent Application No. 202311444826.2, filed on October 31, 2023, which is hereby incorporated by reference in its entirety.

TECHNICAL FIELD

The present disclosure relates to the technical field of communications, and in particular, to a random access method, a communication apparatus, and a storage medium.

BACKGROUND

A cell-free system is a potential deployment form of future networks, i.e., the network always provides a UE-centric serving network for the user equipment (UE). In this way, performance differences between a cell edge and a cell center are eliminated, and at the same time, the impact of mobility issues such as handover/cell reselection on the user experience is avoided. In the cell-free system, a reasonable working assumption is that the UE enters the 'cell-free' network mode in an initial access phase, i.e., the UE is caused to establish the link between the UE and multiple access points (APs) within the cell-free system in the initial access phase.

SUMMARY

In one aspect, a random access method is provided. The random access method is applied to a first node. The random access method includes:

sending a plurality of random access preambles to a second node, where the plurality of random access preambles are used to jointly determine a random access preamble corresponding to a random access procedure; and receiving a random access response message sent from the second node.

In another aspect, a random access method is provided. The random access method is applied to a second node. The random access method includes:

receiving a plurality of random access preambles sent from a first node, where the plurality of random access preambles are used to jointly determine a random access preamble corresponding to a random access procedure; and sending a random access response message to the first node.

In yet another aspect, a communication apparatus is provided. The communication apparatus is applied to a first node. The communication apparatus includes:

a sending unit, configured to send a plurality of random access preambles to a second node, where the plurality of random access preambles are used to jointly determine a random access preamble corresponding to a random access procedure; and a receiving unit, configured to receive a random access response message sent from the second node.

In yet another aspect, a communication apparatus is provided. The communication apparatus is applied to a second node. The communication apparatus includes:

a receiving unit, configured to receive a plurality of random access preambles sent from a first node, where the plurality of random access preambles are used to jointly determine a random access preamble corresponding to a random access procedure; and a sending unit, configured to send a random access response message to the first node.

In yet another aspect, there is provided a communication apparatus. The communication apparatus includes: a memory and a processor, where the memory stores instructions executable for the processor, and the processor is configured, upon the instructions being executed, to enable the communication apparatus to perform the method according to any one of above-mentioned aspects.

In yet another aspect, there is provided a computer-readable storage medium. The computer-readable storage medium stores computer instructions that, when run on a computer, enable the computer to perform the path determination method according to any one of above-mentioned aspects.

In yet another aspect, there is provided a computer program product including computer instructions. In response that the computer instructions are run on a computer, the computer is enabled to execute the method according to any one of above-mentioned aspects.

BRIEF DESCRIPTION OF THE DRAWINGS

The accompanying drawings are used to provide a further understanding of technical solutions of the present disclosure, and are constituted as a part of the specification. The accompanying drawings are used to explain the technical solutions of the present disclosure together with the embodiments of the present disclosure, but do not constitute a limitation on the technical solutions of the present disclosure.

FIG. 1 is a schematic diagram of composition of a cell-free system according to some embodiments of the present disclosure.
FIG. 2 is a schematic diagram of a random access procedure for a 5G NR system according to some embodiments of the present disclosure.
FIG. 3 is a structural schematic diagram of a communication system according to some embodiments of the present disclosure.
FIG. 4 is a flowchart of a random access method according to some embodiments of the present disclosure.
FIG. 5 is a schematic diagram of sending a plurality of random access preambles according to some embodiments of the present disclosure.
FIG. 6 is a schematic diagram of a data structure according to some embodiments of the present disclosure.
FIG. 7 is a schematic diagram of another data structure according to some embodiments of the present disclosure.
FIG. 8 is a flowchart of another random access method according to some embodiments of the present disclosure.
FIG. 9 is a schematic diagram of composition of a communication apparatus according to some embodiments of the present disclosure.
FIG. 10 is a schematic diagram of composition of another communication apparatus according to some embodiments of the present disclosure.
FIG. 11 is a structural schematic diagram of a communication apparatus according to some embodiments of the present disclosure.

DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

Unless otherwise required by the context, throughout the specification and claims, a term "comprise" or "include" and variations thereof (such as a third person singular form "comprises" or "includes" and a present participle form "comprising" or "including") is interpreted as open and inclusive, which means "include, but not limited to." In the description of the specification, terms "one/an embodiment," "some embodiments," "exemplary embodiments," "example," "specific example," or "some examples" are intended to indicate that specific features, structures, materials, or characteristics related to the embodiment or example are included in at least one embodiment or example in the present disclosure. Schematic representations of the above terms do not necessarily refer to the same embodiment(s) or example(s). In addition, the described specific features, structures, materials, or characteristics may be included in any one or more embodiments or examples in any suitable manner.

Expressions such as "first" and "second" are used for descriptive purposes only, and are not to be understood as indicating or implying a relative importance or implicitly indicating a number of indicated technical features. Thus, features limited with wordings like "first" or "second," etc., may explicitly or implicitly include one or more of the feature(s). In the description of the present disclosure, unless otherwise specified, wordings "multiple", "a plurality of" or "the plurality of" mean a number of two or more than two.

In the embodiments of the present disclosure, wordings such as "exemplarily" or "for example" and variations thereof are used to represent examples, instances, or illustrations. Any embodiment or design solution described in the embodiments of the present disclosure with wordings such as "exemplarily" or "for example" should not be illustrated as being more preferred or advantageous over other embodiments or design solutions. Specifically, the usage of the wordings such as "exemplary/exemplarily" or "for example" is intended to present related concepts in a concrete way.

In addition, the usage of the phrase "based on" is meant to be open and inclusive, since a process, step, calculation or other actions that are "based on" one or more of the described conditions or values may, in practice, be based on additional conditions or exceed those described values.

Cell splitting technology in traditional cellular systems is currently considered an effective way to improve wireless system capacity. However, with the deployment of various low-power network nodes, including micro cells, small cells, home nodeB, and relay nodes, in traditional cellular systems, cellular systems are showing an increasingly heterogeneous and dense trend. This results in severe inter-cell interference, and frequent handovers during UE mobility also reduce system capacity and user experience. Also, in traditional cellular systems, system capacity interference during dense cell networking is limited. As the cell radius decreases, there is an obvious inflection point in system capacity. This also means that the approach of improving system capacity per unit coverage area by splitting cells is increasingly approaching the upper limit.

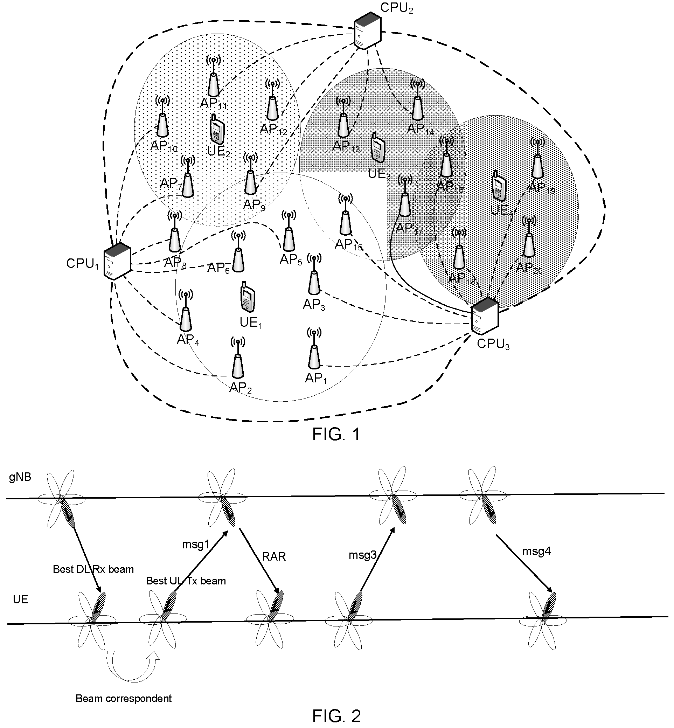

For example, as shown in FIG. 1, FIG. 1 is a schematic diagram of the composition of a cell-free system provided in the embodiments of the present disclosure. Referring to FIG. 1, the cell-free system includes a plurality of central processing units (CPU), such as $CPU_1$, $CPU_2$, and $CPU_3$, a plurality of UEs, such as $UE_1$, $UE_2$, and $UE_3$, and a plurality of APs, such as $AP_1$-$AP_{20}$. In the cell-free system, the plurality of APs installed with one or more antennas are distributed in a large area, data is sent to a CPU through a fronthaul link, and the same time domain resources and frequency domain resources are used to provide services for the plurality of UEs. Continuing to refer to FIG. 1, in the cell-free system, a UE in a connected state has a cell centered on the UE itself, and the cell moves along with the UE during movement. This can minimize the impact of issues such as inter-cell interference and frequent handovers on the UE. For example, for $UE_1$ shown in FIG. 1, $AP_1$-$AP_6$ near $UE_1$ may be understood as a cell centered on $UE_1$.

In the cell-free system, one assumption is that a UE works in a cell-free mode only after a radio resource control (RRC) connection has been established. Therefore, before that, the UE still needs to first establish an RRC connection with a cell in a cellular system in the form of a cellular system, and then switch or migrate from the cellular system to the cell-free system. However, a drawback of the solution based on this assumption is that the cellular system and the cell-free system are systems designed based on two different design concepts. The cellular system is base station-centric, while the cell-free system is UE-centric. Cobbling together two systems with different design concepts, when a UE accesses a coexistence system where cellular and cell-free systems coexist, it still faces severe inter-cell interference and needs to frequently perform cell selection/cell reselection and other issues. Therefore, it is a more reasonable working assumption to enter the 'cell-free' network mode in an initial access stage, that is, the UE establishes links with the plurality of APs in the initial access stage. To achieve the goal of completing initial access in the 'cell-free' network mode, many problems need to be solved, one of which is how to perform capacity expansion on random access resources.

The reasons why capacity expansion on random access resources is required are as follows: continuing to refer to FIG. 1, the plurality of APs connected to respective CPUs are distributed in a large area and responsible for communicating with UEs. In the traditional cellular system, this area may be a coverage range of several or a plurality of base stations, but in the cell-free system, there may be only one master control unit, such as $CPU_1$, $CPU_2$, or $CPU_3$. Random access resources in the cellular system are in cell-specific allocation manners. Each cell is independently configured with time domain resources, frequency domain resources, and bit domain resources for random access. The time domain resources and frequency domain resources correspond to random access occasions (RO), and the bit domain resources correspond to random access preambles. After introducing the cell-free system, since the coverage control area of the CPU is a coverage of the plurality of original base stations, and the design requirement for the 6th generation mobile networks (6G) is that a connection density per square kilometer is $10^6$~$10^8$ UEs. Compared to the requirement in the 5th generation mobile networks (5G) where the connection density per square kilometer is six million UEs, this is increased by more than 10 times. Therefore, capacity expansion on random access resources is required.

Capacity expansion on random access resources involves the random access procedure. To facilitate understanding, the random access procedure for the 5G New Radio (NR) system is first illustrated below as an example.

As shown in FIG. 2, FIG. 2 is a schematic diagram of a random access procedure for a 5G NR system provided in the embodiments of the present disclosure. Referring to FIG. 2, first, a UE sends a random access preamble (i.e., message (msg) 1 shown in FIG. 1) on an appropriate RO according to physical random access channel (physical random access channel, PRACH) transmission parameters configured by a base station (for example, a next generation nodeB (gNB)) and a synchronization signal and PBCH (physical broadcast channel) block (SSB) selected by the UE. During the transmission of the random access preamble, if the transmit-receive (Tx-Rx) reciprocity on the UE side can be guaranteed, there will be a fixed mapping between a receiving beam (Rx beam) of the UE and a transmitting beam (Tx beam) of the UE. Then, the UE may determine a unique Tx beam based on the UE's reception for the SSB. Specifically, the UE may attempt to receive SSBs from the base station using different Rx beams, and determine a best or appropriate Rx beam (e.g., an Rx beam with the highest reference signal received power (RSRP) value or an RSRP value higher than a predefined threshold). Then, based on the best or appropriate Rx beam, a corresponding Tx beam is determined. An RO used for sending PRACH may be determined according to a relationship between the SSB and the RO. Based on this relationship, the gNB may implicitly determine an index of a SSB selected by the UE. Then, the gNB may use a beam that has a quasi co-

EP 4 773 719 A1

located (QCL) relationship with a beam for sending this SSB to transmit subsequent downlink (DL) transmissions (including msg2 and msg4 shown in FIG. 2, where msg2 may also be referred to as a random access response (RAR), and msg4 is a downlink channel with a UE contention resolution identifier). It should be noted that msg1-msg4 shown in FIG. 2 are messages corresponding to a four-step procedure in a random access procedure, and detailed descriptions of msg1-msg4 may refer to descriptions of the four-step procedure in some technologies, which will not be repeated herein. In FIG. 2, best DL Rx beam represents a best downlink receiving beam, best UL Tx beam represents a best uplink transmitting beam, and beam correspondent represents beam correspondence.

Resources for random access preambles in the 5G NR system are configured from three aspects. For example, in the time domain, available random access occasions in the time domain are configured through a parameter PRACH-ConfigurationIndex, and the time domain density is adjusted according to a quantity of UEs accessing within a coverage range; in an extreme scenario, all slots within a frame of 10ms may be provided for random access occasions. In the frequency domain, available random access occasions in the frequency domain are configured through parameters msg1-FrequencyStart and msg1-Frequency Division Multiplexing (msg1-FDM), where msg1-FDM is a multiplexing factor for frequency domain PRACH, which determines the frequency domain capacity of PRACH, with a maximum of 8. In the bit domain, a root sequence and $N_{CS}$ of random access preambles within a cell are configured through parameters PRACH-Root SequenceIndex and zero Correlation Zone Config, and $N_{CS}$, combined with a complex algorithm, determines a maximum quantity of available random access preambles within a root sequence, with a current limitation that no more than 64 random access preambles are generated from one root sequence.

Considering the continuity of technology and inheriting more available characteristics, capacity expansion on random access resources should also be carried out from the above three aspects.

The above provides an example illustration for the random access procedure for the 5G NR system. Solutions of the embodiments of the present disclosure will be described below with reference to the accompanying drawing of the specification.

Technical solutions provided in the embodiments of the present disclosure may be applied to various mobile communication networks, for example, an NR mobile communication network adopting 5G, future mobile communication networks (e.g., 6G wireless communication systems), or a convergence system of multiple communications (e.g., a coexistence system where cellular systems and cell-free systems coexist), which are not limited in the embodiments of the present disclosure.

A network architecture of a mobile communication network (including but not limited to 3G, 4G, 5G and future mobile communication networks) in the embodiments of the present disclosure may include a network-side device (for example, including but not limited to a base station) and a receiving-side device (for example, including but not limited to a terminal). Furthermore, it should be understood that, in this example, in downlink, a first communication node (which may also be referred to as a first communication node device) may be a base station side device, and a second communication node (which may also be referred to as a second communication node device) may be a terminal side device; of course, in uplink, the first communication node may also be a terminal side device, and the second communication node may also be a base station side device. In device-to-device communication where two communication nodes are devices, both the first communication node and the second communication node may be base stations or terminals. The first communication node and the second communication node may be referred to as the first node and the second node for short, respectively.

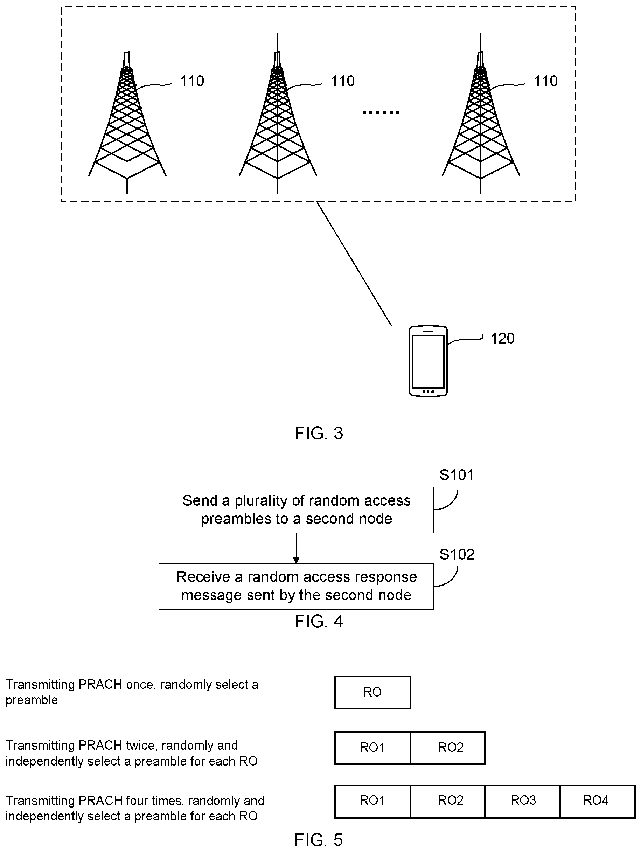

For example, taking the network side device being a base station and a receiving side device being a terminal as an example, FIG. 3 shows a structural schematic diagram of a communication system provided in the embodiments of the present disclosure. As shown in FIG. 3, the communication system 10 includes a base station 110 and a terminal 120. The base station 110 and the terminal 120 may be connected for communication.

In some embodiments, a base station 110 is configured to 120 provide wireless access services to a plurality of terminals. Specifically, a base station provides a service coverage area (also referred to as a cell). A terminal 120 entering this area may communicate with the base station 110 through wireless signals, thereby receiving the wireless access service provided by the base station 110.

In some embodiments, the above-mentioned base station 110 may be any one of an evolution nodeB (eNB), a next generation NodeB (gNB), a transmission receive point (TRP), a transmission point (TP), and some other access nodes. According to a size of a provided service coverage area, the base station may further be classified into a macro base station for providing a macro cell, a pico base station for providing a pico cell, or a femto base station for providing a femto cell. With the continuous evolution of wireless communication technologies, a future base station may also adopts other names.

In some embodiments, the terminal 120 may be a device with wireless transceiver functions, which may be deployed on land, including indoors or outdoors, handheld, wearable or vehicle-mounted; may further be deployed on the water surface (such as on ships, etc.); may further be deployed in the air (for example, on airplanes, balloons and satellites, etc.). The terminal may be a mobile phone, a pad, a computer with wireless transceiver functions, a virtual reality (VR) terminal, an augmented reality (AR) terminal, a wireless terminal in the industrial control, a wireless terminal in self driving, a wireless terminal in a remote medical, a wireless terminal in a smart grid, a wireless terminal in transportation safety, a wireless terminal in smart city, a wireless terminal in smart home, etc. The application scenarios are not limited in the embodiments of the present disclosure. The terminal, sometimes, may also be referred to as a user, a user equipment, an access terminal, a UE unit, a UE station, a mobile station, a mobile platform, a remote station, a remote terminal, a mobile device, a UE terminal, a wireless communication device, a UE agent, a UE apparatus, etc., which is not limited in the embodiments of the present disclosure.

It should be understood that FIG. 3 is an exemplary structural diagram, and a number of devices included in the communication system shown in FIG. 3 is not limited, such as a number of base stations and a number of terminals are not limited. Furthermore, in addition to the devices shown in FIG. 3, the communication system shown in FIG. 3 may further include other devices, which is not limited thereto.

Next, as shown in FIG. 4, a random access method is provided in the embodiments of the present disclosure, and the method is applied to a first node, where the first node may be the terminal 120 shown in FIG. 3, and the method may include the following S101 and S102.

In S101, a plurality of random access preambles are sent to a second node.

In some embodiments, when the first node is in a random access procedure, the first node sends the plurality of random access preambles to the second node, where the plurality of random access preambles are used to jointly determine a random access preamble corresponding to a random access procedure, and the second node may be the base station 110 in the communication system shown in FIG. 3.

As an example, sending the plurality of random access preambles to the second node may be sending indexes of respective random access preambles among the plurality of random access preambles to the second node.

As another example, sending the plurality of random access preambles to the second node may be sending a random access preamble (RAP) message to the second node, where the RAP message includes the plurality of random access preambles.

In some embodiments, the RAP message may include indexes of respective random access preambles.

In some embodiments, the first node may send the plurality of random access preambles to the second node in any one of the following states:

a radio resource control (RRC) idle state (RRC_IDLE);
an RRC inactive state (RRC_INACTIVE);
an RRC connected state (RRC_CONNECTED).

In some embodiments, each random access preamble corresponds to a random access occasion.

It should be understood that a conventional random access signal (PRACH or msg1) is sent by selecting a random access preamble (which may also be an index of a random access preamble) based on an RO, and its characteristic is that the first node sends a random access preamble once only in one random access procedure. However, for a single transmission of a random access preamble, only one random access preamble (or random access preamble index) may be randomly selected from at most 64 random access preambles for transmission, and an optional capacity of random access preambles does not exceed 64.

If random access preambles are sent in many times, the first node randomly selects one random access preamble on each RO based on a plurality of grouped ROs, and then sends the plurality of random access preambles. It should be understood that selection requirements for random access preambles on respective ROs may be different. That is, for different ROs among the plurality of grouped ROs, the selection for a random access preamble by the first node is independently and randomly performed. Therefore, optional capacity for twice of random selections of random access preambles increases to $64^2$, and the optional capacity for four times of random selections increases to $64^4$, and so on. More times of transmissions of random access preambles may increase the optional capacity of random access preambles at an exponential power level, thereby expanding the capacity of random access resources in the bit domain, that is, achieving capacity expansion on random access resources.

For example, as shown in FIG. 5, FIG. 5 is a schematic diagram of sending a plurality of random access preambles according to the embodiments of the present disclosure. With reference to FIG. 5, for example, if the first node selects and sends one random access preamble on one RO, the random access preamble may be randomly selected from 64 random access preambles, and the capacity of random access preambles in the bit domain is 64. As another example, if the first node selects and sends one random access preamble on RO1 and RO2, respectively, the first node may randomly select random access preambles twice, and the capacity of random access preambles in the bit domain is expanded to $64^2$. As a further example, if the first node selects and sends one random access preamble on RO1, RO2, RO3, and RO4, respectively, the first node may randomly select random access preambles four times, and the capacity of random access preambles in the bit domain is expanded to $64^4$.

Therefore, the first node sends the plurality of random access preambles to the second node, where the plurality of random access preambles are used to jointly determine a random access preamble in one random access procedure, thereby achieving capacity expansion on random access resources.

In some embodiments, the plurality of grouped random access occasions (ROs) are referred to as a random access occasion group (RO group). A configuration or determination for the time domain resources and frequency domain resources of the random access occasion group needs to be aligned on both the first node side and the second node side (e.g., a base station, a central control unit, etc.). The second node may explicitly configure the time domain resources and frequency domain resources of the random access occasion group to the terminal. Alternatively, the first node may implicitly deduce the time-frequency domain resources of the random access occasion group via other parameters and signaling.

It should be noted that, in a case where the plurality of random access preambles are used to jointly determine a random access preamble corresponding to a random access process, the first node treats the plurality of random access preambles sent on the plurality of random access occasions within the random access occasion group as one complete transmission for random access preambles. Correspondingly, the second node treats the plurality of random access preambles received on the plurality of random access occasions within the random access occasion group as one complete reception for random access preambles.

Since selections for random access preambles by the first node on different random access occasions within the random access occasion group are independently from each other and randomly performed, when sending the plurality of random access preambles, the first node treats the joint entity of the plurality of random access preambles sent on different random access occasions as one complete random access preamble. For example, in a case where a quantity of random access occasions in a random access occasion group is 2, on random access occasion 1, the first node selects a random access preamble A from 64 random access preambles; on random access occasion 2, the first node selects a random access preamble B from 64 random access preambles. In this complete procedure of sending random access preambles (or may be understood as in this random access procedure), the random access preamble sent by the first node is the random access preamble A concatenated with the random access preamble B, or the random access preamble B concatenated with the random access preamble A.

For example, when a single RO is characterized by 6 bits, in the above example, the first node needs to use 12 bits to characterize the complete random access preamble sent this time. Similarly, in a case where the quantity of random access occasions in the random access occasion group is 4, 24 bits are needed to characterize the complete random access preamble sent this time; in a case where the quantity of random access occasions in the random access occasion group is 8, 48 bits are needed to characterize the complete random access preamble sent this time.

It should be understood that, in the above embodiments, the first node independently and randomly selecting one random access preamble from 64 random access preambles on each RO within the random access occasion group and then sending the plurality of random access preambles are considered as only one possible implementation scheme, which does not constitute a limitation on the technical solution of the present disclosure.

As an example, at least two random access preambles among the plurality of random access preambles are different in at least one of the following aspects: value range, physical random access channel (PRACH) format, sequence length. As another example, at least two random access preambles among the plurality of random access preambles are the same in at least one of the following aspects: value range, PRACH format, sequence length.

A value range includes a root sequence, a candidate random access preamble set, and a quantity of candidate random access preambles.

That is, for at least two random access preambles among the plurality of random access preambles, the at least two random access preambles may use the same root sequence or may use different root sequences. The at least two random access preambles may be uniformly selected from the 64 random access preambles included in the same candidate random access preamble set, or may not be uniformly selected from the 64 random access preambles included in the same candidate random access preamble set. The quantity of candidate random access preambles selectable for the at least two random access preambles may be the same or may be different. The at least two random access preambles may use the same PRACH format or may use different PRACH formats. The at least two random access preambles may use the same sequence length or may use different sequence lengths.

For example, taking sending the plurality of random access preambles to the second node as sending two random access preambles, that is, there are two ROs in the random access occasion group provided to the first node for sending the two random access preambles, this may be generally understood as a two-stage processing manner for random access preamble transmission. The two stages of transmissions for the random access preambles correspond to the transmission for random access preambles on the first RO and the second RO, respectively. The two-stages of transmissions for the random access preambles are not limited to using the same root sequence. It is not limited that the two-stages of transmissions for the random access preambles are both selected from the same 64 candidate preamble sequences; the quantities of candidate random access preambles selectable for two-stages of transmissions for the random access preambles may also be different. The two-stages of transmissions for the random access preambles are not limited to using the same PRACH format. The two-stages of transmissions for the random access preambles are not limited to using the same sequence length.

In some embodiments, an i-th random access preamble among the plurality of random access preambles is used to indicate a configuration parameter to be used for an (i+1)-th random access preamble. The configuration parameter includes at least one of the following: a root sequence, a candidate sequence index range, a time domain resource, a frequency domain resource; where i is a positive integer. That is, in a case where the i-th random access preamble among the plurality of random access preambles is selected as a certain random access preamble, it may indicate for the (i+1)-th random access preamble to use at least one of a corresponding root sequence, a candidate sequence index range, a time domain resource, or a frequency domain resource. The candidate sequence index range may refer to a range other than a non-root sequence index range.

For example, taking the i-th random access preamble being selected as using a random access preamble X as an example, a root sequence number that the (i+1)-th random access preamble should use may be calculated according to an agreed function formula Y=F1 (X). Alternatively, based on random access preamble X, the candidate sequence index range that the (i+1)-th random access preamble should use may be specified as {X-a, X+b}. Alternatively, time-frequency resources and/or frequency domain resources that the (i+1)-th random access preamble should use may be calculated according to an agreed function formula Z=F2 (X). Alternatively, a time-frequency resource range and/or frequency domain resource range that the (i+1)-th random access preamble should use may be deduced based on an interval into which random access preamble X falls.

In some embodiments, a first random access preamble among the plurality of random access preambles is used to indicate a type of random access. The type of random access includes: four-step random access, two-step random access, random access for system information request, random access for multiple transmissions to improve coverage, random access for reduced capability (Redcap), random access for network slicing (network slicing), etc.

In some embodiments, the last random access preamble among the plurality of random access preambles is used as a random access preamble for conflict resolution.

As an example, taking sending the plurality of random access preambles to the second node as sending two random access preambles to the second node as an example, the plurality of random access preambles being used to jointly determine a random access preamble corresponding to a random access procedure may be shown in the following formula (1):

$$\mathrm{N}^{multi}_{preamble} = m \cdot \mathrm{N}^{1}_{preamble} + \mathrm{N}^{2}_{preamble} \qquad \text{Formula (1)}$$

where $\mathrm{N}^{multi}_{preamble}$ is a random access preamble formed by combining two random access preambles $\mathrm{N}^{1}_{preamble}$ and $\mathrm{N}^{2}_{preamble}$. If both two random access preambles are selected from the same 64 random access preambles, it means that $m = 2^6 = 64$. For the value of m, the upper limit is 64, but it is not limited to m=64; the value of m may be a power of 2 (such as 2, 4, or 8), or may be any positive integer, which is determined based on a value range of a second random access preamble or other factors. When m=0, it is considered that the first random access preamble and the second random access preamble are directly concatenated. Flexibly setting the combination parameter m provides flexibility for capacity expansion on random access resources, rather than being limited to expanding the capacity of available random access preambles to $64^2$.

As another example, taking sending the plurality of random access preambles to the second node as sending four random access preambles to the second node as an example, the plurality of random access preambles being used to jointly determine a random access preamble corresponding to a random access procedure may be shown in the following formula (2):

$$\mathrm{N}^{multi}_{preamble} = m \cdot n \cdot p \cdot \mathrm{N}^{1}_{preamble} + n \cdot p \cdot \mathrm{N}^{2}_{preamble} + p \cdot \mathrm{N}^{3}_{preamble} + \mathrm{N}^{4}_{preamble} \qquad \text{Formula (2)}$$

where $\mathrm{N}^{1}_{preamble}$ represents the first random access preamble among the four random access preambles, $\mathrm{N}^{2}_{preamble}$ represents the second random access preamble among the four random access preambles, $\mathrm{N}^{3}_{preamble}$ represents the third random access preamble among the four random access preambles, $\mathrm{N}^{4}_{preamble}$ represents the fourth random access preamble among the four random access preambles, and m, n, and p are all integers, with upper limits of 64 for each of m, n, and p.

It should be noted that, taking the communication system shown in FIG. 3 as a cell-free system as an example, the above embodiments may be implemented in a cell-free system where the second node is unaware of the first node or the second node is not configured with an index. In a case where the second node is configured with an index and the second node is aware of the first node, in addition to the above embodiments still being implementable, it is also possible to have a plurality of second nodes in the cell-free system share the same random access occasion resource pool, but achieve the purpose of capacity expansion of available random access preambles by configuring different random access root sequences for different second nodes.

In some embodiments, the random access preamble is sent based on a random access resource. In a case where a cellular system and a cell-free system coexist, that is, in a case where the communication system shown in FIG. 3 is a coexistence system where the cellular system and the cell-free system coexist, the random access resource includes a random access resource of the cellular system and a random access resource of the cell-free system. The random access resource of the cellular system and the random access resource of the cell-free system are different in at least one of the following aspects: band, carrier, bandwidth part (BWP), physical resource block (PRB), subcarrier (subcarrier).

In some embodiments, a random access preamble has a corresponding random access preamble index. In a case where a cellular system and a cell-free system coexist, that is, in a case where the communication system shown in FIG. 3 is a coexistence system where the cellular system and the cell-free system coexist, the random access preamble index includes a random access preamble index of the cellular system and a random access preamble index of the cell-free system. The random access preamble index of the cellular system and the random access preamble index of the cell-free system are determined based on different root sequences, or the random access preamble index of the cellular system and the random access preamble index of the cell-free system are determined based on different random access preamble indexes within a same root sequence.

It should be understood that even if the cell-free system is introduced in future mobile communication networks, due to certain distinctions in scenarios targeted by the cell-free system and the traditional mobile communication system, and the migration of network modes requires time, the cell-free system and the cellular system will coexist for a long time, and coverage areas have significant overlap. In such a scenario, it is necessary to properly handle mutual interference problems of random access signals for accessing the cell-free system and the cellular system, and differentiate random access resources for the cell-free system and the cellular system from a perspective of resource reuse.

Therefore, in the frequency domain, the random access resource of the cellular system and the random access resource of the cell-free system may use different bands, carriers, bandwidth parts, physical resource blocks, and subcarriers, respectively. In the bit domain, the random access preamble index of the cellular system and the random access preamble index of the cell-free system are determined based on different root sequences, or the random access preamble index of the cellular system and the random access preamble index of the cell-free system are determined based on different random access preamble indexes in the same root sequence, that is, a new feature combination is defined for the cell-free system, or an offset of the random access preamble index of the cell-free system with respect to the random access preamble index of the cellular system is defined.

In S102, a random access response message sent from the second node is received.

As an example, receiving the random access response message sent from the second node may be receiving the random access response message sent from the second node based on a random access response (RAR) window.

In some embodiments, the RAR window is located after a first symbol, where the first symbol is a last symbol of a last random access occasion among a plurality of random access occasions corresponding to the plurality of random access preambles.

In some embodiments, a starting position of the RAR window is a second symbol, the second symbol is a first symbol in an earliest control resource set (CORESET) corresponding to a physical downlink control channel (PDCCH) in a target common search space (CSS) set, where the target CSS set is a CSS set configured for determining a Type1-PDCCH for the first node. That is, the starting position of the RAR window is the first symbol of the earliest CORESET of a PDCCH that is configured for receiving the Type1-PDCCH CSS set for the first node.

In some embodiments, the random access response message is carried in a medium access control (MAC) protocol data unit (PDU), where the MAC PDU includes a first MAC subheader and a second MAC subheader, the first MAC subheader includes a random access preamble identifier (RAPID), and the second MAC subheader includes an RAPID and a MAC RAR.

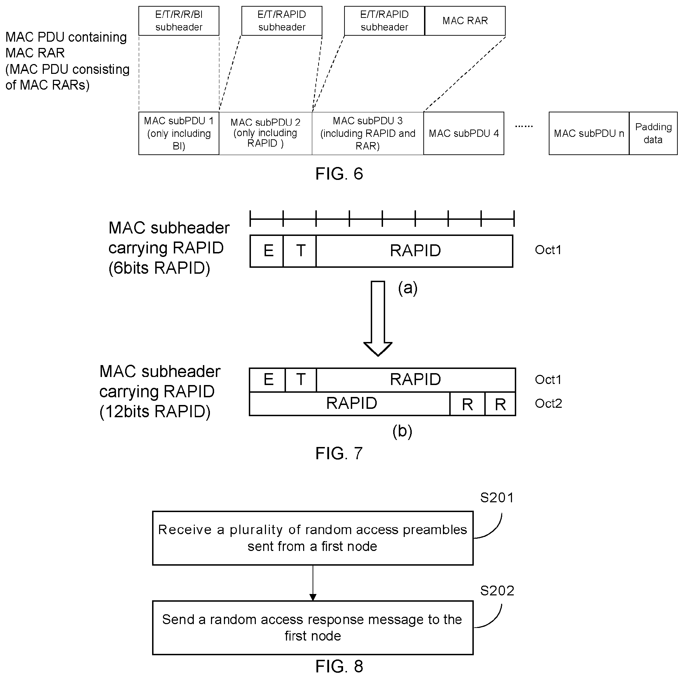

Exemplarily, as shown in FIG. 6, the MAC PDU may include: one or more MAC subPDUs and paddings. In FIG. 6, "consisting" indicates composition.

In some embodiments, a bit width of the RAPID in the first MAC subheader is related to a quantity of the plurality of random access preambles.

As can be seen from the above examples, when 6 bits are used to represent a random access preamble on a single RO, and when a quantity of random access occasions in a random access occasion group is 2, the first node needs to use 12 bits to represent the completely sent random access preamble in this instance. Similarly, when the quantity of random access occasions in the random access occasion group is 4, 24 bits are needed to represent the completely sent random access preamble in this instance; when the quantity of random access occasions in the random access occasion group is 8, 48 bits are needed to represent the completely sent random access preamble in this instance. Therefore, in a case of sending the plurality of random access preambles, a structure of the MAC PDU in the random access response message is adjusted accordingly.

Taking sending two random access preambles to the second node as an example, as shown in FIG. 7, a bit width of the RAPID corresponding to the two random access occasions corresponding to the two random access preambles is adjusted from 6 bits to 12 bits.

As shown in (a) of FIG. 7, the MAC subPDU includes three fields:

a extension (E) field, which is used to indicate whether other fields are included after the current MAC subPDU (i.e., whether the current MAC subPDU is the last one in the MAC PDU);

a type (T) field, which is used to indicate a type of the MAC subheader; for example, when T is set to 0, it indicates that the MAC subheader includes a backoff indicator (BI); when T is set to 1, it indicates that the MAC subheader includes a RAP identifier (ID); and in the structure shown in (a) of FIG. 7, T should be set to 0;

RAPID, which corresponds to a preamble index carried in the random access request message with respect to the first node. Thus, the first node may determine whether the corresponding RAR is successfully received based on the RAPID. For example, if the RAPID is the same as the index carried in the random access request message sent by the first node, it is considered that the corresponding RAR is successfully received.

As shown in (b) of FIG. 7, the MAC subPDU includes six fields:

a extension (E) field;
a type (T) field;
two RAPIDs;
two reserve (R) bits;

Based on the embodiment shown in FIG. 4, the first node sends the plurality of random access preambles to the second node, and the plurality of random access preambles are used to jointly determine a random access preamble corresponding to a random access procedure, thereby achieving capacity expansion on random access resources, which helps improve the performance of the first node in the initial access procedure.

In some embodiments, as shown in FIG. 8, a random access method is further provided in the embodiments of the present disclosure, and the method is applied to a second node, the second node may be the base station 110 shown in FIG. 3 above, and the method may include the following S201 to S202.

In S201, a plurality of random access preambles sent from a first node are received.

The plurality of random access preambles are used to jointly determine a random access preamble corresponding to a random access procedure.

The description of the plurality of random access preambles and how to jointly determine a random access preamble corresponding to one random access procedure based on the plurality of random access preambles may refer to the corresponding description in S101 above, which is not repeated herein.

In some embodiments, the second node is a second node among a plurality of second nodes comprised in a cell-free system.

As an example, in a case where the plurality of second nodes included in the cell-free system are unaware of the terminal or the plurality of second nodes are not configured with indexes, a larger value may be directly configured for the frequency domain parameter msg1-FDM, until all frequency domain resources within the bandwidth are consumed.

msg1-FDM refers to, in the random access procedure, a subcarrier spacing adopted by the terminal when initiating a first message for random access. msg1-FDM indicates how many PRACH occasions there are in the frequency domain at the current time point, i.e., the starting position of the PRACH channel in the frequency domain.

As another example, in a case where the plurality of second nodes in the cell-free system are configured with indexes and the plurality of second nodes are aware of the terminal, configuration parameters of the plurality of second nodes are different in at least one of the following aspects: uplink initial access bandwidth part, random access time domain resource, random access frequency domain resource.

It should be understood that configuring different uplink initial access bandwidth parts for different second nodes thereby avoids access interference between different second nodes, and improves access capacity. And configuring different random access time domain resources and random access frequency domain resources for different second nodes (for example, different additional RACH configurations (additional RACH config) may be configured for different second nodes) thereby achieves capacity expansion on random access resources in the frequency domain.

In S202, a random access response message is sent to the first node.

In some embodiments, after the second node receives the plurality of random access preambles sent from the first node, the second node generates a random access response message, and then sends the random access response message to the first node.

In some embodiments, the random access response message includes identifier information corresponding to the random access preamble corresponding to one random access procedure determined jointly based on the plurality of random access preambles. By way of example, the random access response message may carry a RAPID, the RAPID corresponds to indexes of the plurality of random access preambles sent from the first node.

In some embodiments, the first node is configured to receive the random access response message, and a random access response (RAR) window is located after a first symbol, and the first symbol is a last symbol of a last random access occasion among a plurality of random access occasions corresponding to the plurality of random access preambles. Detailed description of the random access response message may refer to the corresponding description of the random access response message in S102 above, which is not repeated herein.

The above embodiments achieve capacity expansion on random access resources from the bit domain, time domain, and frequency domain respectively, to improve the performance of the terminal in the initial access procedure. In some embodiments, in the 3rd Generation Partnership Project (3GPP) Release 17, a repetition function for the message 3 physical uplink shared channel (msg3 PUSCH) is provided. The second node configures an optional repetition number list to the first node, but in the future, the repetition numbers may need to be further extended to options not supported in the old repetition number list. Generally, parameters in the old repetition number list need to be extended, the reason may be that a new function is introduced, the combination of the new function and the msg3 PUSCH repetition function causes the parameters in the old repetition number list to need extension, based on this, a parameter extension method that considers backward compatibility is further provided in the embodiments of the present disclosure. The method includes the following S301 to S302.

In S301, the second node sends configuration information to the first node; correspondingly, the first node receives the configuration information sent from the second node.

In some embodiments, in a case where a new function is introduced for the msg3 PUSCH repetition function, the second node generates the configuration information, and then sends the configuration information to a plurality of first nodes. Correspondingly, the first node receives the configuration information sent from the second node. The first node may be one of the plurality of first nodes. The new function may be a repetition function of PRACH.

In some embodiments, the configuration information includes at least one of the following: a first repetition number list and a second repetition number list. A maximum repetition number in the first repetition number list is less than a maximum repetition number in the second repetition number list.

For example, taking the first repetition number list as {1, 2, 3, 4, 7, 8, 12, 16} and the second repetition number list as {1, 2, 3, 4, 8, 12, 16, 32} as an example. As can be seen from the above example, the maximum repetition number in the first repetition number list is 16, the maximum repetition number in the second repetition number list is 32, the maximum repetition number 16 in the first repetition number list is less than the maximum repetition number 32 in the second repetition number list. The first repetition number list may be understood as an old repetition number list, and the second repetition number list may be understood as a new repetition number list.

In S302, the first node determines whether to store the second repetition number list based on its own capability information.

The capability information of the first node itself is used to represent capabilities that the first node is capable of supporting.

In some embodiments, in a case where the first node determines, based on its own capability information, that the capability supported by itself matches the capability corresponding to the second repetition number list, the first node stores the second repetition number list. In a case where the first node determines, based on its own capability information, that the capability supported by itself does not match the capability corresponding to the second repetition number list, i.e., in a case that the first node does not support the capability corresponding to the second repetition number list, the first node does not store the second repetition number list, and the first node may store the first repetition number list.

Thus, after a new function is introduced for the msg3 PUSCH repetition function, the second node, based on the combination of the msg3 PUSCH repetition function and the new function, generates a new repetition number list, i.e., the second repetition number list, and then sends configuration information to the first node, the configuration information at least includes the second repetition number list, so that the first node may determine whether to store the second repetition number list based on its own capability information.

It should be understood that the second repetition number list is generated by the second node based on the combination of the msg3 PUSCH repetition function and the new function, if the capability of a first node matches the capability corresponding to the second repetition number list, it may be understood that the first node is a new first node. If a first node does not match the capability corresponding to the second repetition number list, it may be understood that the first node is an old first node. In this way, each first node among the plurality of first nodes executes the aforementioned S302, that is to say, a new first node and an old first node among the plurality of first nodes each store a repetition number list corresponding to themselves, without affecting each other, thus efficiently achieving the purpose of parameter expansion.

The foregoing mainly introduces the solutions provided in the present disclosure from the perspective of interaction between various nodes. It can be understood that, in order to implement the above-mentioned functions, the various nodes (e.g., the first node and the second node) include corresponding hardware structures and/or software modules for performing the various functions. Those skilled in the art should easily realize that the present disclosure is able to be implemented in the form of hardware or a combination of hardware and computer software in combination with algorithms and steps described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

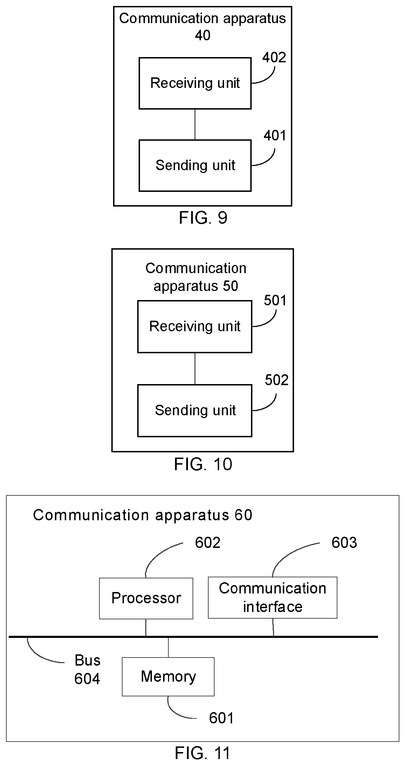

FIG. 9 is a schematic diagram of composition of a communication apparatus provided in the embodiments of the present disclosure. As shown in FIG. 9, the communication apparatus 40 includes a sending unit 401 and a receiving unit 402.

The communication apparatus 40 may be the above-mentioned first node or a chip in the first node. When the communication apparatus 40 is configured to implement the functions of the first node in the above-mentioned embodiments, various units are configured to implement the following functions.

A sending unit 401 is configured to send a plurality of random access preambles to a second node, where the plurality of random access preambles are used to jointly determine a random access preamble corresponding to a random access procedure.

A receiving unit 402 is configured to receive a random access response message sent from the second node.

In some embodiments, each random access preamble corresponds to a random access occasion.

In some embodiments, an i-th random access preamble among the plurality of random access preambles is used to indicate a configuration parameter to be used for an (i+1)-th random access preamble, where the configuration parameter comprises at least one of: a root sequence, a candidate sequence index range, a time domain resource, a frequency domain resource; where i is a positive integer.

In some embodiments, a first random access preamble among the plurality of random access preambles is used to indicate a type of random access.

In some embodiments, the receiving unit 402 is configured to receive the random access response message sent from the second node based on a random access response (RAR) window; where the RAR window is located after a first symbol, and the first symbol is a last symbol of a last random access occasion among a plurality of random access occasions corresponding to the plurality of random access preambles.

In some embodiments, a starting position of the RAR window is a second symbol, the second symbol is a first symbol in an earliest control resource set corresponding to a physical downlink control channel (PDCCH) in a target common search space (CSS) set, and the target CSS set is a CSS set configured for determining a Type1-PDCCH for the first node.

In some embodiments, the random access response message is carried in a medium access control (MAC) protocol data unit (PDU), the MAC PDU comprises a first MAC subheader and a second MAC subheader, the first MAC subheader comprises a random access preamble identifier (RAPID), and the second MAC subheader comprises an RAPID and a MAC RAR.

In some embodiments, a bit width of the RAPID in the first MAC subheader is related to a quantity of the plurality of random access preambles.

In some embodiments, at least two random access preambles among the plurality of random access preambles are different in at least one of the following aspects: value range, physical random access channel (PRACH) format, sequence length.

In some embodiments, at least two random access preambles among the plurality of random access preambles are the same in at least one of the following aspects: value range, PRACH format, sequence length.

In some embodiments, a random access preamble is sent based on a random access resource; in response to coexistence of a cellular system and a cell-free system, the random access resource comprises a random access resource of the cellular system and a random access resource of the cell-free system; the random access resource of the cellular system and the random access resource of the cell-free system are different in at least one of the following aspects: band, carrier, bandwidth part, physical resource block, subcarrier.

In some embodiments, a random access preamble has a corresponding random access preamble index; in response to coexistence of a cellular system and a cell-free system, the random access preamble index comprises a random access preamble index of the cellular system and a random access preamble index of the cell-free system; the random access preamble index of the cellular system and the random access preamble index of the cell-free system are determined based on different root sequences; or the random access preamble index of the cellular system and the random access preamble index of the cell-free system are determined based on different random access preamble indexes within a same root sequence.

FIG. 10 is a schematic diagram of composition of another communication apparatus provided in the embodiments of the present disclosure. As shown in FIG. 10, the communication apparatus 50 includes a receiving unit 501 and a sending unit 502.

The communication apparatus 50 may be the above-mentioned second node or a chip in the second node. When the communication apparatus 50 is configured to implement the functions of the second node in the above-mentioned embodiments, various units are configured to implement the following functions.

A receiving unit 501 is configured to receive a plurality of random access preambles sent from a first node, where the plurality of random access preambles are used to jointly determine a random access preamble corresponding to a random access procedure.

A sending unit 502 is configured to send a random access response message to the first node.

In some embodiments, each random access preamble corresponds to a random access occasion.

In some embodiments, an i-th random access preamble among the plurality of random access preambles is used to indicate a configuration parameter to be used for an (i+1)-th random access preamble, where the configuration parameter comprises at least one of: a root sequence, a candidate sequence index range, a time domain resource, a frequency domain resource; where i is a positive integer.

In some embodiments, a first random access preamble among the plurality of random access preambles is used to indicate a type of random access.

In some embodiments, the first node is configured to receive the random access response message, and a random access response (RAR) window is located after a first symbol, and the first symbol is a last symbol of a last random access occasion among a plurality of random access occasions corresponding to the plurality of random access preambles.

In some embodiments, a starting position of the RAR window is a second symbol, the second symbol is a first symbol in an earliest control resource set corresponding to a physical downlink control channel (PDCCH) in a target common search space (CSS) set, and the target CSS set is a CSS set configured for determining a Type1-PDCCH for the first node.

In some embodiments, the random access response message is carried in a medium access control (MAC) protocol data unit (PDU), the MAC PDU comprises a first MAC subheader and a second MAC subheader, the first MAC subheader comprises a random access preamble identifier (RAPID), and the second MAC subheader comprises an RAPID and a MAC RAR.

In some embodiments, a bit width of the RAPID in the first MAC subheader is related to a quantity of the plurality of random access preambles.

In some embodiments, at least two random access preambles among the plurality of random access preambles are different in at least one of the following aspects: value range, physical random access channel (PRACH) format, sequence length.

In some embodiments, at least two random access preambles among the plurality of random access preambles are the same in at least one of the following aspects: value range, PRACH format, sequence length.

In some embodiments, a random access preamble is received based on a random access resource; in response to coexistence of a cellular system and a cell-free system, the random access resource comprises a random access resource of the cellular system and a random access resource of the cell-free system; the random access resource of the cellular system and the random access resource of the cell-free system are different in at least one of the following aspects: band, carrier, bandwidth part, physical resource block, subcarrier.

In some embodiments, a random access preamble has a corresponding random access preamble index; in response to coexistence of a cellular system and a cell-free system, the random access preamble index comprises a random access preamble index of the cellular system and a random access preamble index of the cell-free system; the random access preamble index of the cellular system and the random access preamble index of the cell-free system are determined based on different root sequences; or the random access preamble index of the cellular system and the random access preamble index of the cell-free system are determined based on different random access preamble indexes within a same root sequence.

In some embodiments, the second node is a second node among a plurality of second nodes comprised in a cell-free system; configuration parameters of the plurality of second nodes are different in at least one of the following aspects: uplink initial access bandwidth part, random access time domain resource, random access frequency domain resource.

It should be noted that the units in FIG. 9 and FIG. 10 may also be referred to as modules. For example, a sending unit may be referred to as a sending module. In addition, in the embodiments shown in FIG. 9 and FIG. 10, the names of the various units may not be the names shown in the figures. For example, the sending unit may also be referred to as a communication unit, and the receiving unit may also be referred to as a communication unit.

If the various units in FIG. 9 and FIG. 10 are implemented in the form of the software functional unit and sold or used as independent products, they may be stored in a computer-readable storage medium. Based on this understanding, the technical solutions of the present disclosure may be essentially, or a part of the technical solutions of the present disclosure that contributes to the prior arts, or all or a portion of the technical solutions of the present disclosure may be, embodied in the form of a software product, and the computer software product may be stored in a storage medium including couples of instructions, thus to enable a computer device (may be a personal computer, a server, a network device, etc.) or a processor to perform all or a portion of steps of the method in the various embodiments of the present disclosure. The storage medium for storing a computer software product includes various types of media capable of storing program codes, such as a USB flash drive, a mobile disk, a read-only memory (ROM), a Random-access memory (RAM), a magnetic disk, or an optical disk.

In a case where the communication apparatus 40 or the communication apparatus 50 implements the functions of the above-mentioned integrated modules by adopting the form of hardware, there is provided a structural schematic diagram of a communication apparatus in the embodiments of the present disclosure. As shown in FIG. 11, the communication apparatus 60 includes a memory 601, a processor 602, a communication interface 603, and a bus 604.

The memory 601 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 602 may implement or perform various exemplary logical blocks, modules and circuits described in combination with the present disclosure. The processor 602 may be a central processor, a general-purpose processor, a digital signal processor, an application specific integrated circuit, a field programmable gate array, or other programmable logic component, a transistor logic component, a hardware assembly, or any combination thereof. The processor 602 may implement or execute various illustrative logical blocks, modules and circuits described in conjunction with the disclosed contents the present disclosure. The processor 602 may also be a combination that implements computing functions, for example, the processor 802 includes a combination of one or more microprocessors, a combination of a DSP (digital signal processor) and a microprocessor, or the like.

The communication interface 603 is configured to connect with other devices through a communication network. The communication network may be the Ethernet, a radio access network, a wireless local area networks (WLAN), or the like.

In some embodiments, the memory 601 may exist independently from the processor 602, and the memory 601 may be connected to the processor 602 through the bus 604 for storing instructions or program codes. In a case where the processor 602 invokes and executes instructions or program codes stored in the memory 601, the random access method provided in the embodiments of the present disclosure may be implemented.

In embodiments, the memory 601 may be integrated with the processor 602.

The bus 604 may be an extended industry standard architecture (EISA) bus, or the like. The bus 604 may be classified as an address bus, a data bus, or a control bus, or the like. For ease of representation, only one thick solid line is used in FIG. 11 for representing the bus 604, but it does not indicate that there is only one bus or one type of bus.

Through the description of the above implementations, those of ordinary skill in the art may clearly understand that for the convenience and simplicity of the description, the division of the above functional modules is given merely as an example. In practical applications, the above functions can be allocated to different functional modules according to requirements, that is, the internal structure of the base station or terminal may be divided into different functional modules to complete all or part of the functions described above.

A computer-readable storage medium is further provided in the embodiments of the present disclosure. All or part of the processes in the above method embodiments may be implemented by related information of an information hardware indicated by computer instructions. The programs may be stored in the above-mentioned computer-readable storage medium, and upon being executed, the programs may include the processes as described in the above method embodiments. The computer-readable storage medium may be an internal storage unit of the first communication node or the second communication node in any of the foregoing embodiments, for example, a hard disk or an internal memory of a computer device. The above-mentioned computer-readable storage medium may also be an external storage device of the above-mentioned first communication node or the second communication node, such as a plug-in hard disk, a smart media card (SMC), a secure digital (SD) card, a flash card, etc., equipped on the above-mentioned first communication node or the second communication node. Furthermore, the above-mentioned computer-readable storage medium may include both an internal storage unit and an external storage device of the above-mentioned first communication node or second communication node. The above-mentioned computer-readable storage medium is configured to store the above-mentioned computer programs and other programs and data required by the above-mentioned first communication node or second communication node. The above-mentioned computer-readable storage medium may further be configured to temporarily store data that has been output or is to be output. The above-mentioned computer-readable storage medium may include a non-transitory computer-readable storage medium.

A computer program product is further provided in the embodiments of the present disclosure. The computer product includes computer programs that, upon being run on a computer, enable the computer to perform any one of the random access methods provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, wordings "comprise/comprises/comprising" do not exclude other components or steps, and wordings "a/an" and "one" do not exclude a case of a number of a plurality. A single processor or other units may implement couples of functions listed in the claims. Some measures are recorded in different dependent claims, but it does not mean that these measures cannot be combined to produce good effects.

Although the present disclosure is described in conjunction with specific features and embodiments thereof, obviously, various modifications and combinations may be made thereto without departing from the spirit and scope of the present disclosure. Accordingly, the specification and accompanying drawings herein are merely exemplary illustration of the present disclosure defined by the claims, and are deemed to cover any and all modifications, variations, combinations or equivalents within the scope of the present disclosure. Obviously, those skilled in the art can make various modifications and variations to the present disclosure without departing from the spirit and scope of the present disclosure. In this way, if these modifications and variations in the present disclosure fall within the scope of the claims and their equivalent technologies of the present disclosure, then the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure should be subject to the protection scope of the claims.

**Claims**

1. A random access method, applied to a first node, wherein the method comprises:

   sending a plurality of random access preambles to a second node, wherein the plurality of random access preambles are used to jointly determine a random access preamble corresponding to a random access procedure; and
   receiving a random access response message sent from the second node.

2. The method according to claim 1, wherein each random access preamble corresponds to a random access occasion.

3. The method according to claim 1, wherein an i-th random access preamble among the plurality of random access preambles is used to indicate a configuration parameter to be used for an (i+1)-th random access preamble, wherein the configuration parameter comprises at least one of: a root sequence, a candidate sequence index range, a time domain resource, a frequency domain resource; where i is a positive integer.

4. The method according to claim 1, wherein a first random access preamble among the plurality of random access preambles is used to indicate a type of random access.

5. The method according to claim 1, wherein the random access response message is carried in a medium access control (MAC) protocol data unit (PDU), the MAC PDU comprises a first MAC subheader and a second MAC subheader, the first MAC subheader comprises a random access preamble identifier (RAPID), and the second MAC subheader comprises an RAPID and a MAC RAR.

6. The method according to claim 5, wherein a bit width of the RAPID in the first MAC subheader is related to a quantity of the plurality of random access preambles.

7. The method according to claim 1, wherein at least two random access preambles among the plurality of random access preambles are different in at least one of the following aspects:
   value range, physical random access channel (PRACH) format, sequence length.

8. The method according to claim 1, wherein at least two random access preambles among the plurality of random access preambles are the same in at least one of the following aspects:
   value range, PRACH format, sequence length.

9. The method according to claim 1, wherein a random access preamble is sent based on a random access resource; in response to coexistence of a cellular system and a cell-free system, the random access resource comprises a random access resource of the cellular system and a random access resource of the cell-free system; the random access resource of the cellular system and the random access resource of the cell-free system are different in at least one of the following aspects: band, carrier, bandwidth part, physical resource block, subcarrier.

10. The method according to claim 1, wherein a random access preamble has a corresponding random access preamble index;

in response to coexistence of a cellular system and a cell-free system, the random access preamble index comprises a random access preamble index of the cellular system and a random access preamble index of the cell-free system;

the random access preamble index of the cellular system and the random access preamble index of the cell-free system are determined based on different root sequences; or

the random access preamble index of the cellular system and the random access preamble index of the cell-free system are determined based on different random access preamble indexes within a same root sequence.

11. A random access method, applied to a second node, wherein the method comprises:

receiving a plurality of random access preambles sent from a first node, wherein the plurality of random access preambles are used to jointly determine a random access preamble corresponding to a random access procedure; and

sending a random access response message to the first node.

12. The method according to claim 11, wherein each random access preamble corresponds to a random access occasion.

13. The method according to claim 11, wherein an i-th random access preamble among the plurality of random access preambles is used to indicate a configuration parameter to be used for an (i+1)-th random access preamble, wherein the configuration parameter comprises at least one of: a root sequence, a candidate sequence index range, a time domain resource, a frequency domain resource; where i is a positive integer.

14. The method according to claim 11, wherein a first random access preamble among the plurality of random access preambles is used to indicate a type of random access.

15. The method according to claim 11, wherein the random access response message is carried in a medium access control (MAC) protocol data unit (PDU), the MAC PDU comprises a first MAC subheader and a second MAC subheader, the first MAC subheader comprises a random access preamble identifier (RAPID), and the second MAC subheader comprises an RAPID and a MAC RAR.

16. The method according to claim 15, wherein a bit width of the RAPID in the first MAC subheader is related to a quantity of the plurality of random access preambles.

17. The method according to claim 11, wherein at least two random access preambles among the plurality of random access preambles are different in at least one of the following aspects:
value range, physical random access channel (PRACH) format, sequence length.

18. The method according to claim 11, wherein at least two random access preambles among the plurality of random access preambles are the same in at least one of the following aspects:
value range, PRACH format, sequence length.

19. The method according to claim 11, wherein a random access preamble is received based on a random access resource;
in response to coexistence of a cellular system and a cell-free system, the random access resource comprises a random access resource of the cellular system and a random access resource of the cell-free system; the random access resource of the cellular system and the random access resource of the cell-free system are different in at least one of the following aspects: band, carrier, bandwidth part, physical resource block, subcarrier.

20. The method according to claim 11, wherein a random access preamble has a corresponding random access preamble index;

in response to coexistence of a cellular system and a cell-free system, the random access preamble index comprises a random access preamble index of the cellular system and a random access preamble index of the cell-free system;

the random access preamble index of the cellular system and the random access preamble index of the cell-free system are determined based on different root sequences; or

the random access preamble index of the cellular system and the random access preamble index of the cell-free system are determined based on different random access preamble indexes within a same root sequence.

21. The method according to claim 11, wherein the second node is a second node among a plurality of second nodes comprised in a cell-free system;

configuration parameters of the plurality of second nodes are different in at least one of the following aspects: uplink initial access bandwidth part, random access time domain resource, random access frequency domain resource.

22. A communication apparatus, comprising: a processor and a memory; wherein the memory stores instructions that are executable for the processor;

the processor is configured to, upon executing the instructions, cause the communication apparatus to implement the method according to any one of claims 1 to 21.

23. A computer-readable storage medium, wherein the computer-readable storage medium comprises computer instructions that, when run on a computer, enable the computer to execute the method according to any one of claims 1 to 21.

FIG. 1

FIG. 2

FIG. 3

S101

Send a plurality of random access
preambles to a second node

S102

Receive a random access response
message sent by the second node

FIG. 4

Transmitting PRACH once, randomly select a
preamble

| RO |
|----|

Transmitting PRACH twice, randomly and
independently select a preamble for each RO

| RO1 | RO2 |
|-----|-----|

Transmitting PRACH four times, randomly and
independently select a preamble for each RO

| RO1 | RO2 | RO3 | RO4 |
|-----|-----|-----|-----|

FIG. 5

MAC PDU containing
MAC RAR
(MAC PDU consisting
of MAC RARs)

| E/T/R/R/BI subheader | E/T/RAPID subheader | E/T/RAPID subheader | MAC RAR |
|---|---|---|---|

| MAC subPDU 1 (only including BI) | MAC subPDU 2 (only including RAPID ) | MAC subPDU 3 (including RAPID and RAR) | MAC subPDU 4 | ...... | MAC subPDU n | Padding data |
|---|---|---|---|---|---|---|

FIG. 6

MAC subheader
carrying RAPID
(6bits RAPID)

| E | T | RAPID | | Oct1 |
|---|---|---|---|---|

(a)

MAC subheader
carrying RAPID
(12bits RAPID)

| E | T | RAPID | | | Oct1 |
|---|---|---|---|---|---|
| RAPID | | R | R | | Oct2 |

(b)

FIG. 7

S201

Receive a plurality of random access preambles
sent from a first node

S202

Send a random access response message to the
first node

FIG. 8

Communication apparatus
40

Receiving unit — 402

Sending unit — 401

FIG. 9

Communication
apparatus 50

Receiving unit — 501

Sending unit — 502

FIG. 10

Communication apparatus 60

Processor — 602

Communication
interface — 603

Bus
604

Memory — 601

FIG. 11

## INTERNATIONAL SEARCH REPORT

| | International application No. |
|---|---|
| | **PCT/CN2024/096141** |

| A. | CLASSIFICATION OF SUBJECT MATTER |
|---|---|

H04W74/0833(2024.01)i

According to International Patent Classification (IPC) or to both national classification and IPC

| B. | FIELDS SEARCHED |
|---|---|

Minimum documentation searched (classification system followed by classification symbols)

IPC:H04W74/-,H04L5/-

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, VEN, WPABSC, BING: 多, 联合, 配合, 去蜂窝, 确定, 随机接入前导码, 随机接入时机, 随机接入响应, 组, 组合, 一次, 随机接入过程, one, PRACH, random access response, RAP, RAR, RO, random access preamble, random access procedure, random access occasion, cell free, cell-free, multi-PRACH, multi PRACH, MAC PDU, MAC-PDU

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116076144 A (LENOVO (SINGAPORE) PTE. LTD.) 05 May 2023 (2023-05-05) description, paragraphs 0005-0082, and figures 1-8 | 1-23 |
| A | WO 2023164834 A1 (QUALCOMM INC.) 07 September 2023 (2023-09-07) entire document | 1-23 |
| A | CN 116171636 A (GUANGDONG OPPO MOBILE TELECOMMUNICATIONS CORP., LTD.) 26 May 2023 (2023-05-26) entire document | 1-23 |
| A | US 2023337287 A1 (LG ELECTRONICS INC.) 19 October 2023 (2023-10-19) entire document | 1-23 |
| A | US 2023309150 A1 (NOKIA TECHNOLOGIES OY) 28 September 2023 (2023-09-28) entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2024** | **30 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096141**

| Patent document cited in search report | | | Publication date (day/month/year) | Patent family member(s) | | | Publication date (day/month/year) |
|---|---|---|---|---|---|---|---|
| CN | 116076144 | A | 05 May 2023 | EP | 4218342 | A1 | 02 August 2023 |
| | | | | WO | 2022064462 | A1 | 31 March 2022 |
| | | | | US | 2023371081 | A1 | 16 November 2023 |
| | | | | BR | 112023005177 | A2 | 18 April 2023 |
| | | | | IN | 202317012408 | A | 19 April 2024 |
| WO | 2023164834 | A1 | 07 September 2023 | | None | | |
| CN | 116171636 | A | 26 May 2023 | WO | 2022126667 | A1 | 23 June 2022 |
| | | | | CN | 116171636 | A8 | 14 May 2024 |
| US | 2023337287 | A1 | 19 October 2023 | WO | 2022071755 | A1 | 07 April 2022 |
| | | | | KR | 20230075464 | A | 31 May 2023 |
| US | 2023309150 | A1 | 28 September 2023 | WO | 2018202536 | A1 | 08 November 2018 |
| | | | | US | 2021105822 | A1 | 08 April 2021 |
| | | | | US | 11737144 | B2 | 22 August 2023 |
| | | | | EP | 3620019 | A1 | 11 March 2020 |
| | | | | CN | 110603887 A | A | 20 December 2019 |
| | | | | CN | 110603887 | B | 20 October 2023 |
| | | | | CN | 117377120 | A | 09 January 2024 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311444826